# EUROPÄISCHE PATENTSCHRIFT

(11) **EP 1 872 920 B1**
(45) Veröffentlichungstag und Bekanntmachung des Hinweises auf die Patenterteilung: **17.06.2009**
(21) Anmeldenummer: 06013479.8
(22) Anmeldetag: 29.06.2006
(51) Int. Cl.: B27D 5/00, B23Q 7/00, B23C 3/12

(54) **Formfräsen im Durchlaufverfahren**
Continuous process of form milling
Procédé continu de fraisage de profil

(43) Veröffentlichungstag der Anmeldung: 02.01.2008
(73) Patentinhaber: Homag Holzbearbeitungssysteme AG, 72296 Schopfloch (DE)
(72) Erfinder: Gauss, Achim, 72280 Dornstetten/Hallwangen (DE); Kalmbach, Wilhelm, 72296 Schopfloch (DE)
(74) Vertreter: HOFFMANN EITLE

(56) Entgegenhaltungen:
- EP-A2- 1 302 287
- DE-A1- 4 408 596

## Beschreibung

Die vorliegende Erfindung bezieht sich auf ein Verfahren zur Bearbeitung von Werkstücken im Durchlaufverfahren, insbesondere zum Formfräsen von Werkstücken aus Holz oder holzartigen Materialien im Durchlaufverfahren.

### Stand der Technik

Beim Bearbeiten von Werkstücken im Durchlaufverfahren sind im Vergleich zu stationären Bearbeitungsverfahren höhere Produktionsraten erzielbar, da mehrere Werkstücke gleichzeitig auf einem Förderer platziert und kontinuierlich bearbeitet werden, so dass Totzeiten zum Wechseln der Werkstücke, wie beim stationären Bearbeiten entfallen. Um möglichst hohe Produktionsraten zu erzielen, ist es beim Durchlaufverfahren erwünscht, möglichst hohe Vorschubgeschwindigkeiten einzusetzen, wobei jedoch die Bearbeitungsqualität mit zunehmender Geschwindigkeit vermindert wird. Dies ist insbesondere bei der Bearbeitung der Vorderkante von Werkstücken der Fall.

Herkömmliche Verfahren, bei denen hier das Formfräsen als beispielhafte Bearbeitungsart genannt sei, setzen eine kreisbogenförmige Bewegung über ein Parallelogramm oder über eine Drehachse in Vorschubrichtung ein, um das Werkzeug der Vorschubgeschwindigkeit entsprechend an die Vorderkante des Werkstücks anzulegen und die Fräsbearbeitung durchzuführen. Als weiteres Verfahren ist hierfür das Formfräsen mit einer gleichzeitigen horizontalen und vertikalen Bewegung in Vorschubrichtung bekannt.

Nachteilig ist bei diesen Lösungen, dass es beim Anlegen des Werkzeugs an die Vorderkante zu einem so genannten Anfahrstoß kommt, der je nach Werkstückart (z.B. Massivholz oder Spanplatten) und je nach Profil der Vorderkante die Bearbeitungsqualität beeinträchtigt. Aufgrund des Anfahrstoßes ist daher bei bisherigen Verfahren die maximale Leistung beschränkt. Zudem erfordert insbesondere die Lösung mit gleichzeitiger horizontalen (Y) und vertikalen (Z) Bewegung eine Bahnsteuerung in Y-Z-Richtung, was die Umsetzung des Verfahrens verteuert.

Weiterhin ist für die Hinterkantenbearbeitung eine Lösung bekannt, die einen Linearschlitten mit einem Fräswerkzeug in einer Kreisbogenbewegung auf einem Parallelogramm in Vorschubrichtung führt, um die Bearbeitungsgeschwindigkeit bei kleinen Werkzeugdurchmessern zu verringern.

Ferner offenbart die DE 44 08 596 A1 ein Verfahren nach dem Oberbegriff von Anspruch 1.

### Darstellung der Erfindung

Es ist somit Aufgabe der Erfindung, ein Verfahren zur. Bearbeitung von Werkstücken im Durchlaufverfahren zu entwickeln, der ein Werkstückschonendes Anlegen des Werkzeugs bzw. der Tastung auf die Werkstückvorderkante bei gleichzeitig hohen Vorschubgeschwindigkeiten ermöglicht. Diese Aufgabe wird durch ein Verfahren nach Anspruch 1 gelöst. Weitere vorteilhafte Ausführungsformen sind in den Unteransprüchen beschrieben.

Das erfindungsgemäße Verfahren zur Bearbeitung von Werkstücken im Durchlaufverfahren sieht vor, dass das Werkzeug durch Kreisbogenförmige Bewegung über eine Parallelogrammführung entlang der Vorderkante des Werkstücks geführt wird, wobei der kreisbogenförmigen Bewegung des Werkzeugs eine lineare Bewegung der Werkzeugs in Durchlaufrichtung überlagert wird, bevor das Werkzeug an die Vorderkante des Werkstücks angelegt wird. Dadurch kann selbst bei hohen Bearbeitungsgeschwindigkeiten ein werkstückschonendes Anlegen des Werkzeugs erreicht werden, was zu einer deutlichen Qualitätsverbesserung führt. Es ermöglicht, im Gegensatz zu den oben genannten herkömmlichen Verfahren, höhere Vorschubgeschwindigkeiten und somit eine höhere Werkstückausbringung, wodurch eine deutliche Leistungssteigerung der Produktion erzielt werden kann. Zudem bewirkt die Kombination von Werkstückschonendem Anlegen und höheren Vorschubgeschwindigkeiten, dass die reale Bearbeitungsgeschwindigkeit des Werkzeugs am Werkstückprofil reduziert wird, was ebenso zur Qualitätsverbesserung beiträgt.

Die Geschwindigkeit der linearen Bewegung wird bevorzugt gesteuert oder geregelt. Somit kann der Anlegevorgang und die Bearbeitung genau auf Vorschubgeschwindigkeit, Werkstückparameter wie Material, Beschichtung, Kantenprofilart abgestimmt werden.

Hierbei ist es besonders vorteilhaft, die Geschwindigkeit der linearen Bewegung in Stufen oder stufenlos der Vorschubgeschwindigkeit anzupassen. Dies ermöglicht ein genau kontrollierbares Verhältnis von Bearbeitungsqualität und Produktionsrate.

Entsprechend einer vorteilhaften Ausführungsform der Erfindung ist die Geschwindigkeit der linearen Bewegung abschnittsweise synchron zur Vorschubsgeschwindigkeit. Durch die Synchronisation lässt sich eine besonders gut reproduzierbare und gleichmäßige Bearbeitungsqualität erzeugen.

Die lineare Bewegung erfolgt vorzugsweise pneumatisch, hydraulisch, magnetisch oder elektrisch, wobei insbesondere ein pneumatischer Antrieb kostengünstig ist, während ein magnetischer Antrieb hohe Beschleunigungen und Vorschubgeschwindigkeiten ermöglicht.

Schließlich ist es insbesondere bevorzugt, dass das Anlegen an der Werkstückvorderkante über eine Tastung erfolgt. Hierbei ist es besonders vorteilhaft, dass die Tastung die beim Anlegen auftretenden Kräfte an die Steuerung übermittelt und davon abhängig gezielt die lineare Bewegung steuert. Somit kann bei hohen Vorschubgeschwindigkeiten die Bearbeitungsqualität noch weiter verbessert werden.

### Wege zur Ausführung der Erfindung

Im folgenden wird die Erfindung anhand eines nicht beschränkenden Ausführungsbeispiels näher erläutert.

Hierbei wird z.B. plattenförmiges Werkstück auf einen Förderer positioniert und zur Bearbeitungsposition in der Bearbeitungsmaschine gefördert. Beim Durchlaufen der Bearbeitungsposition wird eine Formfräse an die Vorderkante des Werkstücks herangeführt. Hierbei wird die Formfräse auf einem Kreisbogen über eine Parallelogrammführung oder eine Drehachse in Vorschubrichtung bewegt, wobei die Formfräse zusätzlich auf einem pneumatisch angetriebenen Linearschlitten angebracht ist, der der genannten Kreisbogenbewegung eine lineare Bewegung überlagert. Diese Überlagerung ermöglicht ein sanftes Anlegen der Formfräse.

Der Fräsmotor mit Tastung wird also mittels Parallelogrammführung bzw. Drehachse an dem stirnseitigen Profil der Werkstückvorderkante entlang geführt, wobei die Parallelogrammführung bzw. die Drehachse von dem Linearschlitten in Vorschubrichtung des Werkstücks bewegt wird, bevor und während die Tastung mit dem Werkstück Kontakt aufnimmt. Hierbei wird anfänglich die Geschwindigkeit der Linearbewegung etwas geringer als die Vorschubgeschwindikeit gewählt, wird aber kurz vor dem Anlegen stufenlos bis fast auf den Wert der Vorschubgeschwindigkeit erhöht, bis die Tastung die Vorderkante des Werkstücks berührt. Zu diesem Zeitpunkt synchronisiert die Steuerung die Geschwindigkeit des Linearschlittens mit der Vorschubgeschwindigkeit und die Fräsbearbeitung kann unter Beibehaltung einer hohen Bearbeitungsqualität durchgeführt werden.

## Patentansprüche

1. Verfahren zur Bearbeitung von Werkstücken im Durchlaufverfahren, wobei
ein Werkstück in einer Durchlaufrichtung bewegt wird, und
ein Werkzeug durch kreisbogenförmige Bewegung entlang der Vorderkante des Werkstücks geführt wird,
**dadurch gekennzeichnet, dass**
der kreisbogenförmigen Bewegung des Werkzeugs eine lineare Bewegung des Werkzeugs in Durchlaufrichtung überlagert wird, bevor das Werkzeug an die Vorderkante des Werkstücks angelegt wird, wobei die kreisbogenförmige Bewegung über eine Parallelogrammführung geführt wird.

2. Verfahren nach Anspruch 1, **dadurch gekennzeichnet, dass** die Geschwindigkeit der linearen Bewegung gesteuert oder geregelt ist.

3. Verfahren nach Anspruch 1 oder 2, **dadurch gekennzeichnet, dass** die Geschwindigkeit der linearen Bewegung in Stufen oder stufenlos der Vorschubgeschwindigkeit angepasst wird.

4. Verfahren nach Anspruch 1, 2 oder 3, **dadurch gekennzeichnet, dass** die Geschwindigkeit der linearen Bewegung abschnittsweise synchron zur Vorschubsgeschwindigkeit ist.

5. Verfahren nach einem der Ansprüche 1 bis 4, **dadurch gekennzeichnet, dass** die lineare Bewegung pneumatisch, hydraulisch, magnetisch oder elektrisch erfolgt.

6. Verfahren nach einem der Ansprüche 1 bis 5, **dadurch gekennzeichnet, dass** das Anlegen am Werkstück über eine Tastung erfolgt.

7. Verfahren nach Anspruch 6, **dadurch gekennzeichnet, dass** die Tastung die beim Anlegen auftretenden Kräfte an die Steuerung übermittelt und davon abhängig gezielt die lineare Bewegung steuert.

## Claims

1. Process for machining workpieces by a continuous process, wherein a workpiece is moved in a direction of passage, and a tool is guided along the front edge of the workpiece by circular movement, **characterised in that** a linear movement of the tool in direction of passage is superimposed on the circular movement of the tool before the tool is applied to the front edge of the workpiece, wherein the circular movement is guided over a parallelogram.

2. Process according to claim 1, **characterised in that** the speed of the linear movement is controlled or regulated.

3. Process according to claim 1 or 2, **characterised in that** the speed of the linear movement is adapted to the rate of feed in stages or continuously.

4. Process according to claim 1, 2 or 3, **characterised in that** the speed of the linear movement is synchronous to the rate of feed in sections.

5. Process according to one of claims 1 to 4, **characterised in that** the linear movement is effected pneumatically, hydraulically, magnetically or electrically.

6. Process according to one of claims 1 to 5, **characterised in that** the application to the workpiece is effected via keying.

7. Process according to claim 6, **characterised in that** keying transmits the forces which occur during application to the control and independently thereof controls the linear movement specifically.

## Revendications

1. Procédé d'usinage de pièces d'oeuvre dans un procédé en continu, dans lequel
une pièce d'oeuvre est déplacée dans une direction de passage,
un outil est guidé, par un déplacement en forme d'arc de cercle, le long du bord avant de la pièce d'oeuvre,
**caractérisé en ce qu'**
au déplacement en forme d'arc de cercle de l'outil est superposé un déplacement linéaire de l'outil dans la direction de passage, avant que l'outil accoste au bord avant de la pièce d'oeuvre, le déplacement en forme d'arc de cercle étant guidé par l'intermédiaire d'un guidage par parallélogramme.

2. Procédé selon la revendication 1, **caractérisé en ce que** la vitesse du déplacement linéaire est commandée ou régulée.

3. Procédé selon la revendication 1 ou 2, **caractérisé en ce que** la vitesse du déplacement linéaire est adaptée, par étapes ou de façon progressive continue, à la vitesse d'avance.

4. Procédé selon la revendication 1, 2 ou 3, **caractérisé en ce que** la vitesse du déplacement linéaire est, par tronçons, synchrone par rapport à la vitesse d'avance.

5. Procédé selon l'une des revendications 1 à 4, **caractérisé en ce que** le déplacement linéaire s'effectue de façon pneumatique, hydraulique, magnétique ou électrique.

6. Procédé selon l'une des revendications 1 à 5, **caractérisé en ce que** l'accostage à la pièce d'oeuvre s'effectue par l'intermédiaire d'un palpage.

7. Procédé selon la revendication 6, **caractérisé en ce que** le palpage transmet à la commande les efforts survenant lors de l'accostage et, en fonction de cela, commande à dessein le déplacement linéaire.
